# EUROPEAN PATENT SPECIFICATION

(11) **EP 2 832 443 B1**
(45) Date of publication and mention of the grant of the patent: **13.04.2016**
(21) Application number: 14169889.4
(22) Date of filing: 26.05.2014
(51) Int. Cl.: B01J 20/02, B01J 20/26, B01J 20/28, B01J 20/32, C02F 1/28, D01D 5/098, D01F 1/10, D01F 6/06, C02F 101/00

(54) **METHOD OF PREPARING A FILTER ELEMENT ABSORPTIVE FOR CS**
VERFAHREN ZUR HERSTELLUNG EINES FILTERELEMENTS ZUR CS-ABSORPTION
PROCÉDÉ DE PRÉPARATION D'UN ÉLÉMENT ABSORBANT DE FILTRE POUR CS

(30) Priority: 01.08.2013 CN 201310331819; 16.04.2014 EP 14164976
(43) Date of publication of application: 04.02.2015
(73) Proprietor: The First Institute Of Oceanography Of State Oceanic Administration, Laoshan District Qingdao, Shandong 266061 (CN)
(72) Inventor: Dong, Zhenfang, 266061 Qingdao, Shandong (CN); Ma, Deyi, 266061 Qingdao, Shandong (CN); Shi, Hongqi, 266061 Qingdao, Shandong (CN)
(74) Representative: Gulde & Partner

(56) References cited:
- WO-A1-2011/004382
- VLADIMIR N. EPOV ET AL: "Extraction and determination of Cs in natural waters by ICP-MS after ion exchange separation", JOURNAL OF ANALYTICAL ATOMIC SPECTROMETRY, vol. 19, no. 9, 13 August 2004 (2004-08-13), pages 1225-1229, XP055161428, ISSN: 0267-9477, DOI: 10.1039/b403013c

## Description

### Technological Field

The invention relates to an absorption material for radioactive substances; in particular, it discloses a preparation method of a filter element capable of quickly absorbing cesium (Cs) and with high efficiency.

### Background Technologies

Currently, materials absorptive for Cs mainly consist of AMP-PAN resin, CuFeCN resin or natural mineral; they are characterized by slow absorption, long balancing time and low absorption efficiency; they are applicable to the inspection of absorption rate in the environmental monitoring. It takes about 10 h to treat a sample; the volume of water sample absorption and treatment is at the level of several dozen liters.

The application of research materials absorptive for Cs, including AMP, CuFeCN, zeolite, kaolin, diatomite and iron ore, for nuclear wastewater reveals high time consumption and small absorption capacity; the absorption rate is between 40∼95%. Therefore, the existing materials absorptive for Cs suffer from such defects as low absorption rate and small absorption flow. Most of the materials have an absorption rate of below 95 %; they are characterized by long absorption time and small velocity. The balanced absorption takes several dozen hours and it is not suitable to the demand for swift and highly efficient conditions.

For instance, after the Fukushima nuclear accident on March 11, 2011, the WHOI investigated the radioactive impact of the Fukushima nuclear accident on the international cooperation voyages in mid-July 2011. Pike and Buesseler et al. applied AMP-PAN resin with an absorption rate of 95 % (S.M. Pike, K.O. Buesseler, et al.; J. Radioanal. Nucl. Chem. (2012) DOI 10.1007/s10967-012-2014-5; ISSN 0236-5731). At a velocity of the seawater sample of about 35 ml/min, it took about 600 minutes to treat 20 L of seawater sample; although absorption pillar has realized vessel operation, yet it consumes a huge amount of time and absorption rate depends on ICP-MS to measure residual and stable Cs penetrating the seawater of absorption pillar, thus confirm the absorption rate of absorption pillar and make an accurate calculation of radioactive Cs in the seawater sample.

According to the existing marine radioactive measurement technologies in International Atomic Energy Agency (IAEA), it needs to collect a huge amount of seawater samples and transport to the land base laboratory for analysis and measurement.

All in all, the existing materials absorptive for Cs suffer from low speed and efficiency.

WO 2011/004382 A1 discloses a method of preparing a polymer composite for extracting cesium from nuclear waste. The method comprises reacting a solution of a polymer substrate which is polysulfone or a derivative thereof with ammonium molybdophosphate (AMP) at a temperature of 20 to 50 °C and precipitating the resulting product.

Vladimir N. Epov et al. describe a method of extracting cesium from aqueous samples using an ion exchange column packed with AMP immobilized on glass wool (J. Anal. At. Spectrom., 2004 Vol. 19(9), 1225-1229).

### Brief Description of the Invention

In view of the existing technical problems, the invention aims to provide a preparation method for filter elements capable of quickly and high efficiently absorbing Cs.

This object is achieved by a method of preparing a filter element absorptive for cesium (Cs). The method comprises the procedures of:
1) Modification of a substrate material, comprising:
   adding 1-10 % per weight of ammonium phosphomolybdate and 1-3 % per weight of a coupling agent, selected from methyl methacrylate and styrene, to a substrate material, selected from polypropylene (PP) and polyethersulfone (PES), heating to a temperature in the range of 160 to 220°C and mixing evenly so that the substrate material is combined with ammonium phosphomolybdate;
2) Melt blowing and molding of the filter element, comprising:
   spinning the material prepared in 1) through a 5 µm micropore by a melt blowing method to yield a spinned filament, and forming the spinned filament to an absorptive filter element;
3) Coating of the filter element, comprising:
   coating ammonium phosphomolybdate on the surface of the absorptive filter element prepared in 2) so that the coated ammonium phosphomolybdate is combined with the ammonium phosphomolybdate inside the substrate material;
4) Stabilization and aging treatment of the filter element:
   tempering the filter element for 3 to 12 h at a temperature in the range of 80 to 120 °C.

For the purpose of this application, the expression "the substrate material is combined with ammonium phosphomolybdate" comprises any kind of modification of the substrate material by ammonium phosphomolybdate, including chemical interactions (covalent bonds), non-covalent bonds and any kind of physical interactions. The same applies for the expression "the coated ammonium phosphomolybdate is combined with the ammonium phosphomolybdate inside the substrate material" in procedure 3).

The filter element prepared by the method according to the invention is capable of quickly absorbing cesium (Cs) with high efficiency.

According to a preferred embodiment of the invention, the absorptive filter element formed in procedure 2) has the shape of a hollow rotational cylinder. According to an alternative definition, the filter element has the shape of a tube or pipe. The cylinder or tube may by formed by winding the spinned filament onto and a rotating mandrel.

Preferably, the absorptive filter element has a nominal granularity (filament thickness) and/or an average pore size of 5 µm.

In procedure 2), the absorptive filter element is preferably formed with a thickness of 5 to 50 mm, most preferably with a thickness of 30 to 50 mm. In case the filter element has the shape of a hollow cylinder or tube, the thickness relates to the wall thickness of the cylinder or tube.

The coating procedure 3) preferably comprises the step of immersing the modified substrate material a coating solution comprising ammonium phosphomolybdate. Preferably, the coating solution comprises 1 to 10 % by weigh of ammonium phosphomolybdate. Further, the coating solution may comprise ammonium phosphomolybdate dissolved in a solution of ammonium hydroxide, preferably in a solution of ammonium hydroxide having a concentration of 0.5 mol/L.

In the coating procedure 3), the filter element is immersed in the coating solution of ammonium phosphomolybdate at conditions preferably comprising a temperature in the range of 10 to 95 °C, a pH in the range of 1 to 5 and at vacuum conditions. The duration may be 1 h.

The coating procedure 3) may further comprise the step of flushing the filter element coated with the ammonium phosphomolybdate with a cleaning solution. In particular, the cleaning solution may be a solution of HNO₃, preferably a solution of 0.5 mol/L HNO₃. The flushing is preferably conducted until the rinsing solution becomes clear indicative of no ammonium phosphomolybdate being washed out of the filter.

In the coating procedure 3), the ammonium phosphomolybdate newly coated on the surface of the absorptive filter element has a thickness of less than 1 µm.

A particular the coating procedure in 3) comprises: dissolving ammonium phosphomolybdate in a solution of ammonium hydroxide to yield a concentration of ammonium phosphomolybdate in the range of 1 to 10 % per weight; immersing the absorptive filter element prepared in procedure 2) in the above coating solution at a temperature in the range of 10 to 95 °C, a pH in the range of 1 to 5 and vacuum conditions for 1 h; flushing the absorptive filter element with a 0.5 mol/L HNO₃ solution until the HNO₃ cleaning fluid becomes clear; where the ammonium phosphomolybdate coated on the surface of the absorptive filter element has a thickness of less than 1 µm.

According to a particular method of preparing a PP filter element:
in procedure 1), the substrate material is polypropylene (PP), the coupling agent is methyl methacrylate with a weight percentage of 2 %, and the ammonium phosphomolybdate has a weight percentage of 5 %; and the heating temperature is 190°C;
in procedure 2), the spinned filament is formed to an absorptive filter element with a thickness of 30 mm in form of a hollow rotational cylinder (tube); and
the coating procedure in 3) comprises: dissolving ammonium phosphomolybdate in a solution of ammonium hydroxide with a concentration of 0.5 mol/L to yield a concentration of ammonium phosphomolybdate of 1 % per weight, immersing the absorptive filter element prepared in 2) in the above coating solution at 95 °C, pH=1 and vacuum conditions for 1 h; and flushing the absorptive filter element with 0.5 mol/L HNO₃ solution until the HNO₃ cleaning fluid becomes clear; where ammonium phosphomolybdate coated on the surface of the absorptive filter element is less than 1 µm in thickness.

According to another particular method of preparing a PP filter element:
in procedure 1), the substrate material is polypropylene (PP), the coupling agent is methyl methacrylate with a weight percentage of 2 %; the ammonium phosphomolybdate has a weight percentage of 5 %; and the heating temperature is 190 °C;
in procedure 2), the spinned filament is formed to an absorptive filter element with a thickness of 30 mm in form of a hollow rotational cylinder (tube); and
the coating procedure 3) comprises: dissolving ammonium phosphomolybdate in a solution of ammonium hydroxide with a concentration of 0.5 mol/L; oti yield a concentration of ammonium phosphomolybdate of 5 % per weight, immersing the absorptive filter element prepared in 2) in the above coating solution at 55 °C, pH=3 and vacuum conditions for 1h;and flushing with 0.5 mol/L HNO₃ solution until the HNO₃cleaning fluid becomes clean; where ammonium phosphomolybdate coated on the surface of the absorptive filter element is less than 1 µm in thickness.

According to a particular method of preparing a PES filter element:
in procedure 1), the substrate material is polyethersulfone (PES), the coupling agent is styrene with a weight percentage of 3 %, and the ammonium phosphomolybdate has a weight percentage of 10 %; and the heating temperature is 220 °C;
in procedure 2), the spinned filament is formed to an absorptive filter element with a thickness of 50 mm in form of a hollow rotational cylinder (tube); and
the coating procedure 3) comprises: dissolving ammonium phosphomolybdate in a solution of ammonium hydroxide with a concentration of 0.5 mol/L to yield a concentration of ammonium phosphomolybdate of 1 % per weight, immersing the absorptive filter element prepared in 2) in the above coating solution at 95 °C, pH=1 and vacuum conditions for 1 h; and flushing with 0.5 mol/L HNO₃ solution until HNO₃ cleaning fluid becomes clean; where ammonium phosphomolybdate coated on the surface of the absorptive filter element is less than 1 µm in thickness.

The beneficial effect of the invention includes:
The swift and highly efficient Cs absorption filter element prepared by this invention enjoys an excellent water permeability, oxidization resistance, long-term immersion in hot water at temperatures below 100 °C, radiation-proof decomposition and stable absorption. It is able to treat a seawater sample in 10 minutes that requires 10 h when an AMP-PAN resin is used as filter element; the velocity is 4L/min and absorption rate is 99.9%; stable Cs measurement is not needed to confirm the absorption rate.

### Brief Description of the Figures:

Figure 1 shows the γ energy spectrogram of a Cs absorption filter element according to sample 01 after monitoring the surface layer of a sea area;
Figure 2 shows the γ energy spectrogram of a Cs absorption filter element according to sample 03 after monitoring the surface layer of China's coastal seawater;
Figure 3 shows the γ energy spectrogram of a standard ¹³⁷Cs (118.3 Bq) absorption filter element;
Figure 4 is a schematic diagram of a real-time monitoring system in the marine radioactive field in the invention.

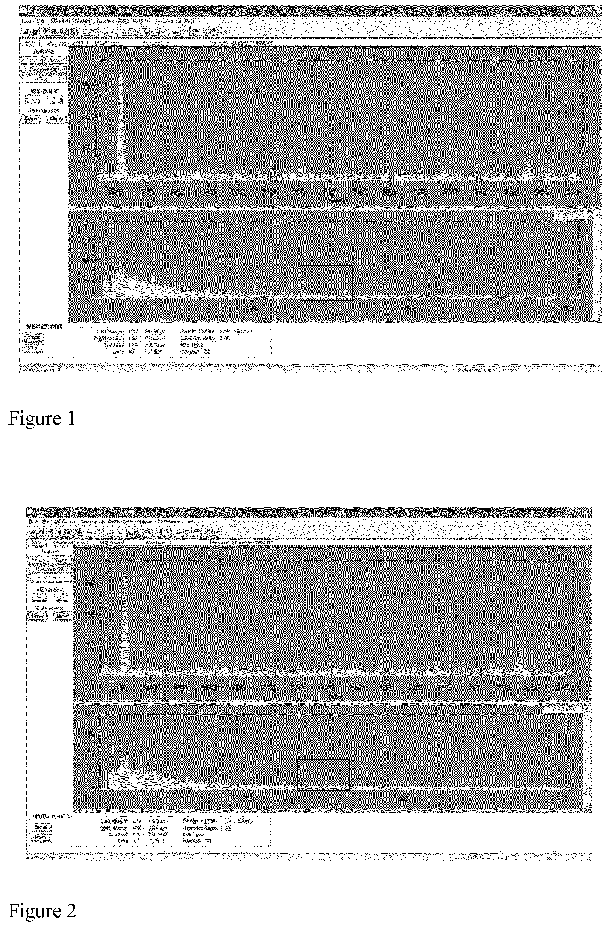

In Figure 1, Figure 2 and Figure 3, the upper part refers to the magnified picture of box in the lower part.

### Concrete implementation of the invention:

The preparation methods of filter element capable of swiftly and high efficiently absorbing Cs provided by the invention preferably applies PP or PES as the substrate materials for micropore spinning; forming an absorptive filter element having the shape of a cylinder and then coat the filter element with AMP. The following embodiment is only intended to further describe the invention; it is not intended to limit the scope of invention.

### Embodiment 1.

The preparation method of a filter element capable of swiftly and high efficiently absorbing Cs is as follows:
1) Modification of substrate materials:
   Add methyl methacrylate and AMP (Ammonium Phosphomolybdate Trihydrate) with a weight percentage of 1% to the substrate material PP (polypropylene resin); heat up until 160°C; mix up evenly so that PP is combined with AMP;
2) Melt blowing and molding of filter element:
   Spin materials prepared in 1) through 5 µm micropore; wind up the spinned filament in the rotational cylinder framework material and form an absorptive filter element with a thickness of 5 mm; the framework materials refer to a hollow polypropylene melt blowing pipe with a nominal granularity of 5 µm.
3) Coating of filter element:
   The concrete procedures of evenly coating AMP on the outside surface of the absorptive filter element prepared in 2) are as follows: dissolve AMP into ammonium hydroxide with a concentration of 0.5mol/L; the quality percentage concentration of AMP is 10 %; then immerse the absorptive filter element prepared in 2) in the above solution at 10 °C, pH=5 and vacuum conditions for 1 h; then flush with 0.5 mol/L HNO₃ solution until HNO₃ cleaning fluid becomes fresh and clean and AMP is not washed out; newly coated AMP on the surface is integrated with AMP in the substrate materials; the newly coated AMP on the surface is less than 1 µm in thickness. The washed-out AMP is recovered and re-utilized.
4) Stabilization and aging treatment of filter element:
   Heat up, stabilize and implement aging process of the filter element prepared in 3) for 12 h at 80 °C and obtain the filter element of swift and highly efficient absorptive Cs.

### Embodiment 2.

The preparation method of a filter element capable of swiftly and high efficiently absorbing Cs s as follows:
1) Modification of substrate materials:
   Add styrene with a weight percentage of 3% and AMP (Ammonium Phosphomolybdate Trihydrate) with a weight percentage of 1% to the substrate material PES (poly ether sulfone); heat up until 220°C; mix up evenly so that PES is combined with AMP;
2) Melt blowing and molding of filter element:
   Spin materials prepared in 1) through 5 µm micropore; wind up the spinned filament in the rotational cylinder framework material and form an absorptive filter element with a thickness of 50 mm; the framework materials refer to hollow polypropylene melt blowing pipe with a nominal granularity of 5 µm.
3) Coating of filter element:
   The concrete procedures of evenly coating AMP on the surface of the absorptive filter element prepared in 2) are as follows: dissolve AMP into ammonium hydroxide with a concentration of 0.5 mol/L; the quality percentage concentration of AMP is 1 %; then immerse absorptive filter element prepared in 2) into the above solution at 95 °C, pH=1 and vacuum conditions for 1 h; then flush with 0.5 mol/L HNO₃ solution until HNO₃cleaning fluid becomes fresh and clean and AMP is not washed out; newly coated AMP on the surface is integrated with AMP in the substrate materials; the newly coated AMP on the surface is less than 1 µm in thickness. The washed-out AMP is recovered and re-utilized.
4) Stabilization and aging treatment of filter element:
   Heat up, stabilize and implement aging process of the filter element prepared in 3) for 3 h at 120 °C and obtain the filter element of swift and highly efficient absorptive Cs.

### Embodiment 3.

The preparation method of a filter element capable of swiftly and high efficiently absorbing Cs is as follows:
1) Modification of substrate materials:
   Add methyl methacrylate with a weight percentage of 2 % and AMP with a weight percentage of 5 % to the substrate material PP; heat up until 190 °C; mix up evenly so that PP is combined with AMP;
2) Melt blowing and molding of filter element:
   Spin materials prepared in 1) through 5 µm micropore; wind up the spinned filament in the rotational cylinder framework materials and form absorptive filter element with a thickness of 30 mm; the framework materials refer to hollow polypropylene melt blowing pipe with a nominal granularity of 5 µm.
3) Coating of filter element:
   The concrete procedures of evenly coating AMP on the surface of the absorptive filter element prepared in 2) are as follows: dissolve AMP in ammonium hydroxide with a concentration of 0.5 mol/L; the quality percentage concentration of AMP is 5 %; then immerse the absorptive filter element prepared in 2) in the above solution at 55 °C, pH=3 and vacuum conditions for 1 h; then flush with 0.5 mol/L HNO₃ solution until HNO₃cleaning fluid becomes fresh and clean and AMP is not washed out; newly coated AMP on the surface is integrated with AMP in the substrate materials; the newly coated AMP on the surface is less than 1 µm in thickness. The washed-out AMP is recovered and re-utilized.
4) Stabilization and aging treatment of filter element:
   Heat up, stabilize and implement aging process of the filter element prepared in 3) for 7 h at 100 °C and obtain the filter element of swift and highly efficient absorptive Cs.

The filter element prepared by the invention methods is applicable to the treatment and emergency disposal of nuclear project radioactive wastewater, on-site real-time monitoring of radioactive Cs in the seawater and fresh water, integration and separation of radioactive Cs upon fuel inadequacy or withdrawal and separation in Cs salt chemical process. The concrete tests are as follows: The filter element prepared in the methods specified in embodiment 1-3 is 100 mm in length, 60 mm in outside diameter and 25 mm in inside diameter; they are referred to as sample 01, 02 and 03, respectively.

### (1) The sample 01 has to receive on-sea test of swift and high efficient absorption of Cs.

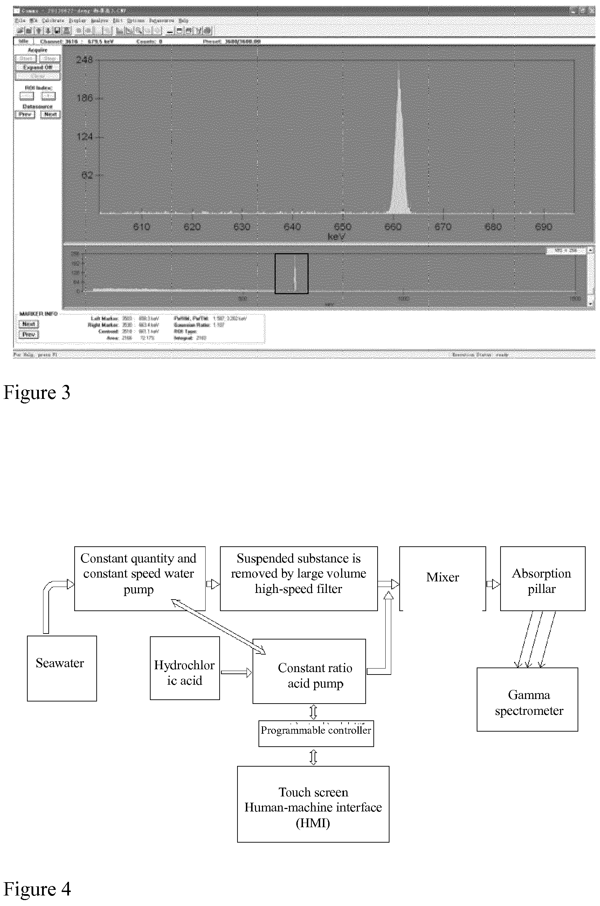

In a certain sea area of West Pacific Ocean, the self-made portable marine radioactive real-time monitoring system is adopted; the inspection system is shown in Figure 4; the seawater on the surface layer is automatically pumped; the absorptive pillar made of the filter element prepared in this invention is able to absorb radioactive Cs in the seawater. Please refer to Table 1 for the basic monitoring information.

**Table 1 Data record of a special monitoring sample in the sea area of West Pacific Ocean**

| Frequency of stepping motor of water pump Hz | Velocity of water pump ml/min | Sampling time Min | Sampling volume/L | ¹³⁷Cs Bq/m³ | ¹³⁴Cs Bq/m³ |
|---|---|---|---|---|---|
| 1670 | 2288 | 668 | 1529 | 2.07±0.11 | 0.49±0.06 |

Please refer to Figure 1 for the γ energy spectrogram of the absorptive filter element of sample 01.

This group of data witnesses a contrast with test of Pike & Buesseler et al. (S.M. Pike, K.O. Buesseler, et al.; J. Radioanal. Nucl. Chem. (2012) DOI 10.1007/s10967-012-2014-5; ISSN 0236-5731). Pike & Buesseler's on-site seawater enjoys a velocity of 35 ml/min in Cs enrichment; the figure in this invention is 2288 ml/min. Pike & Buesseler treat 20 L in 10 h while this invention enriches 1529 L. The ¹³⁴Cs and ¹³⁷Cs activity of the absorptive filter element is only 0.3∼1.4 Bq in such a huge amount of seawater. As for 20 L water sample, the activity of measurement source is 0.04 Bq for such seawater; as for the sample with very low activity, it is extremely difficult to measure γ energy spectrum - it is even lower than the lower detection limit of γ spectrometer. It takes 6 h to measure the γ energy spectrum for 1529 L seawater with a precision of 5% to 12%. Therefore, it can totally meet the monitoring precision requirements. We can see from the γ energy spectrum that ¹³⁴Cs and ¹³⁷Cs are clearly detected in the sample; swift and highly efficient Cs absorptive filter element is abandoned; several dozen liters of seawater are taken back to the land laboratory for γ energy spectrum analysis. It is almost helpless in monitoring the radioactive pollution of sea area. Several tons of seawater sample are taken back to the land laboratory. Less quantity can not make any accurate calculation. Therefore, the swift and highly efficient Cs absorptive filter element is of great significance. The radioactive monitoring of water environment is a very tiring and complex work; however, it becomes easier and more convenient with the help of the swift and highly efficient Cs absorptive filter element according to the invention.

### (2) Absorption rate test of sample 02 at different velocities

Adopt 40 L seawater and put into the test plastic barrel; acidify according to the principle of adding 1 ml hydrochloric acid per 1 L seawater and mix up adequately; then add 10 mg Cs carrier, add 23.6 Bq¹³⁷Cs and mix up the seawater sample evenly; then set up the pulse frequency of stepping motor and adjust until preset velocity; implement absorption test of filter element; once the seawater passes through filter element, residual ¹³⁷Cs is measured by Cs-137 radioactive chemical analytic methods according to GB 6767-86 standard. Please refer to Table 2 for the measurement result.

**Table 2 Data record of absorption test under different velocities**

| Velocity (l/min) | Total amount | Measuring time (s) | Counting rate (Bq) | Net counting rate (Bq) | Remark |
|---|---|---|---|---|---|
| 0.6 | 7412 | 58011 | 0.1278 | -0.0024 | Inspection limit: 0.003 |
| 1 | 2767 | 21467 | 0.1289 | -0.0013 | |
| 1.2 | 7481 | 57693 | 0.1297 | -0.0005 | |
| 1.4 | 1340 | 10512 | 0.1275 | -0.0027 | |
| 1.6 | 5475 | 43319 | 0.1264 | -0.0038 | |
| 1.8 | 7165 | 56172 | 0.1276 | -0.0026 | |
| 3.5 | 7451 | 58046 | 0.1284 | -0.0018 | |
| 4 | 8710 | 68114 | 0.1279 | -0.0023 | |
| Background counting rate | | | 0.1302 | | |

We can see from the test of sample 02 that residual radioactive ¹³⁷Cs in the penetrating fluid is lower than the lower detection limit at different velocities between 0.6 L/min and 4.0 L/min. According to the lower measurement limit, Cs absorption rate is estimated and measured to be higher than 99.9 %. The absorption rate of Cs absorptive filter element can not be 100 %; the activity of missing agent ¹³⁷Cs is enhanced in order to accurately measure the absorption rate. The water sample is able to attain such a high absorption rate by penetrating absorptive filter element at one time at different velocities; it is able to totally meet the absorption demand for water environment.

Compared with the same category of absorption materials, the filter element prepared by the invention method enjoys a highly efficient absorption performance. The environmental radiation monitoring will consume a huge amount of time; each measurement takes several hours or even several days. Large volume, swift and highly efficient absorption on the site is of vital importance to the environmental monitoring industry.

### (3) Seawater absorption monitoring radioactive Cs test of sample 03 on the surface layer of China coastal region

The velocity is set to be 2320.8 ml/min, absorption time is set to be 180 min and seawater sampling volume is set to be 417.7 L. ¹³⁷Cs filter element is measured by γ energy spectrum; the measured γ energy spectrum is shown in Figure 2. Upon calculation, ¹³⁷Cs activity in the seawater on the surface layer of coastal region is 1.15±0.14 Bq/m³. Figure 3 refers to the γ energy spectrogram of standard ¹³⁷Cs (118.3 Bq) absorption filter element; it is adopted for standard scaling. We can clearly see from spectrum contrast that filter element measurement in this patent enjoys less time and high precision.

According to the seawater filtration test of coastal region, 417 L seawater is absorbed; the energy spectrum measurement takes 10 hours; the energy spectrum is not clear and outstanding enough; however, 662 keV γ characteristic energy spectrum line can be distinguished with a measurement precision of only 13 %. The energy spectrum measurement of standard ¹³⁷Cs (118.3 Bq) filter element only takes 1 hour; the energy spectrum is outstanding, background can be almost omitted and measurement precision is much higher accordingly. In the radioactive measurement, the activity of measurement source is of vital importance; once the activity of measurement source is very low, the filter element prepared by the invention methods is able to realize on-site real-time monitoring.

## Claims

1. Method of preparing a filter element absorptive for cesium (Cs), the method comprising the procedures of:
1) Modification of a substrate material, comprising:
adding 1-10 % per weight of ammonium phosphomolybdate and 1-3 % per weight of a coupling agent, selected from methyl methacrylate and styrene, to a substrate material, selected from polypropylene (PP) and polyethersulfone (PES), heating to a temperature in the range of 160 to 220°C and mixing evenly so that the substrate material is modified by ammonium phosphomolybdate;
2) Melt blowing and molding of the filter element, comprising:
spinning the material prepared in 1) through a 5 µm micropore by a melt blowing method to yield a spinned filament, and forming the spinned filament to an absorptive filter element;
3) Coating of the filter element, comprising:
coating ammonium phosphomolybdate on the surface of the absorptive filter element prepared in 2) so that the coated ammonium phosphomolybdate is modified by the ammonium phosphomolybdate inside the substrate material;
4) Stabilization and aging treatment of the filter element:
tempering the filter element for 3 to 12 h at a temperature in the range of 80 to 120 °C.

2. The method according to claim 1, wherein the absorptive filter element formed in procedure 2) has the shape of a hollow rotational cylinder or tube.

3. The method according to claim 2, wherein the absorptive filter element formed in procedure 2) has a nominal granularity or pore size of 5 µm.

4. The method according to any one of claims 1 to 3, wherein in procedure 2) the absorptive filter element is formed with a thickness of 5 to 50 mm, preferably of 30 to 50 mm.

5. The method according to any one of claims 1 to 4, wherein in the coating procedure 3) a coating solution is prepared comprising 1 to 10 % by weigh of ammonium phosphomolybdate.

6. The method according to any one of claims 1 to 5, wherein in the coating procedure 3) a coating solution is prepared comprising ammonium phosphomolybdate dissolved in a solution of ammonium hydroxide, preferably in a solution of ammonium hydroxide having a concentration of 0.5 mol/L.

7. The method according to any one of claims 1 to 6, wherein in the coating procedure 3) the filter element is immersed in a coating solution of ammonium phosphomolybdate at a temperature in the range of 10 to 95 °C, a pH in the range of 1 to 5 and at vacuum conditions.

8. The method according to any one of claims 1 to 7, wherein the coating procedure 3) further comprises flushing the filter element coated with the ammonium phosphomolybdate with a cleaning solution, in particular with a solution of HNO₃, preferably a solution of 0.5 mol/L HNO₃.

9. The method according to any one of claims 1 to 8, wherein in the coating procedure 3) the ammonium phosphomolybdate coated on the surface of the absorptive filter element has a thickness of less than 1 µm.

10. The method according to any one of claims 1 to 9, wherein the coating procedure 3) comprises: dissolving ammonium phosphomolybdate in a solution of ammonium hydroxide to yield a concentration of ammonium phosphomolybdate in the range of 1 to 10 % per weight; immersing the absorptive filter element prepared in procedure 2) in the above coating solution at a temperature in the range of 10 to 95 °C, a pH in the range of 1 to 5 and vacuum conditions for 1 h; flushing the absorptive filter element with a 0.5 mol/L HNO₃solution until the HNO₃cleaning fluid becomes clear; where the ammonium phosphomolybdate coated on the surface of the absorptive filter element has a thickness of less than 1 µm.

11. The method according to any one of claims 1 to 10, wherein:
in procedure 1), the substrate material is polypropylene (PP), the coupling agent is methyl methacrylate with a weight percentage of 2 %, and the ammonium phosphomolybdate has a weight percentage of 5 %; and the heating temperature is 190 °C;
in procedure 2), the spinned filament is formed to an absorptive filter element with a thickness of 30 mm in form of a hollow cylinder or tube; and
the coating procedure in 3) comprises: dissolving ammonium phosphomolybdate in a solution of ammonium hydroxide with a concentration of 0.5 mol/L to yield a concentration of ammonium phosphomolybdate of 1 % per weight, immersing the absorptive filter element prepared in 2) in the above coating solution at 95 °C, pH=1 and vacuum conditions for 1 h; and flushing the absorptive filter element with a 0.5 mol/L HNO₃solution until the HNO₃cleaning fluid becomes clear; where ammonium phosphomolybdate coated on the surface of the absorptive filter element is less than 1 µm in thickness.

12. The method according to any one of claims 1 to 10, wherein:
in procedure 1), the substrate material is polyethersulfone (PES), the coupling agent is styrene with a weight percentage of 3 %, and the ammonium phosphomolybdate has a weight percentage of 10 %; and the heating temperature is 220 °C;
in procedure 2), the spinned filament is formed to an absorptive filter element with a thickness of 50 mm in form of a hollow rotational cylinder; and
the coating procedure 3) comprises: dissolving ammonium phosphomolybdate in a solution of ammonium hydroxide with a concentration of 0.5 mol/L to yield a concentration of ammonium phosphomolybdate of 1 % per weight, immersing the absorptive filter element prepared in 2) in the above coating solution at 95 °C, pH=1 and vacuum conditions for 1 h; and flushing with a 0.5 mol/L HNO₃solution until the HNO₃cleaning fluid becomes clean; where ammonium phosphomolybdate coated on the surface of the absorptive filter element is less than 1 µm in thickness.

13. The method according to any one of claims 1 to 10, wherein:
in procedure 1), the substrate material is polypropylene (PP), the coupling agent is methyl methacrylate with a weight percentage of 2 %; the ammonium phosphomolybdate has a weight percentage of 5 %; and the heating temperature is 190 °C;
in procedure 2), the spinned filament is formed to an absorptive filter element with a thickness of 30 mm in form of a hollow rotational cylinder; and
the coating procedure 3) comprises: dissolving ammonium phosphomolybdate in a solution of ammonium hydroxide with a concentration of 0.5 mol/L; to yield a concentration of ammonium phosphomolybdate of 5 % per weight, immersing the absorptive filter element prepared in 2) in the above coating solution at 55 °C, pH=3 and vacuum conditions for Ih; and flushing with a 0.5 mol/L HNO₃solution until the HNO₃cleaning fluid becomes clean; where ammonium phosphomolybdate coated on the surface of the absorptive filter element is less than 1 µm in thickness.

## Patentansprüche

1. Verfahren zur Herstellung eines Filterelements zur Cäsium(Cs)-Absorption, wobei das Verfahren die folgenden Schritte umfasst:
1) Modizierung eines Substratmaterials, umfassend:
Hinzugeben von 1-10 Gew.-% Ammoniummolybdatophosphat und 1-3 Gew.-% eines Kupplungsagens, ausgewählt aus Methylmethacrylat und Styrol, zu einem Substratmaterial, ausgewählt aus Polypropylen (PP) und Polyethersulfon (PES), Erwärmen auf eine Temperatur im Bereich von 160 bis 220 °C und gleichmäßiges Mischen, sodass das Substratmaterial mit Ammoniummolybdatophosphat modifiziert wird;
2) Schmelzblasen und Formen des Filterelements, umfassend:
Spinnen des in 1) hergestellten Materials durch eine 5-µm-Mikropore mit einem Schmelzblasverfahren, um ein gesponnenes Filament zu erhalten, und Formen des gesponnenen Filaments zu einem Absorptionsfilterelement;
3) Beschichten des Filterelements, umfassend:
Aufbringen von Ammoniummolybdatophosphat auf die Oberfläche des in 2) hergestellten Absorptionsfilterelements, sodass das aufgebrachte Ammoniummolybdatophosphat durch das Ammoniummolybdatophosphat im Inneren des Substratmaterials modifiziert wird;
4) Stabilisierung und Alterungsbehandlung des Filterelements:
Tempern des Filterelements über 3 bis 12 h bei einer Temperatur im Bereich von 80 bis 120 °C.

2. Verfahren nach Anspruch 1, wobei das in Schritt 2) geformte Absorptionsfilter-element die Form eines hohlen Rotationszylinders oder Rohres hat.

3. Verfahren nach Anspruch 2, wobei das in Schritt 2) geformte Absorptionsfilter-element eine nominale Granularität oder Porengröße von 5 µm aufweist.

4. Verfahren nach einem der Ansprüche 1 bis 3, wobei in Schritt 2) das Absorptionsfilterelement mit einer Dicke von 5 bis 50 mm, vorzugsweise von 30 bis 50 mm, geformt wird.

5. Verfahren nach einem der Ansprüche 1 bis 4, wobei in dem Beschichtungsschritt 3) eine Beschichtungslösung hergestellt wird, die 1 bis 10 Gew.-% Ammoniummolybdatophosphat umfasst.

6. Verfahren nach einem der Ansprüche 1 bis 5, wobei in dem Beschichtungsschritt 3) eine Beschichtungslösung hergestellt wird, die Ammoniummolybdatophosphat, gelöst in einer Lösung von Ammoniumhydroxid, vorzugsweise in einer Lösung von Ammoniumhydroxid mit einer Konzentration von 0,5 mol/l, umfasst.

7. Verfahren nach einem der Ansprüche 1 bis 6, wobei in dem Beschichtungsschritt 3) das Filterelement in eine Beschichtungslösung von Ammoniummolybdatophosphat bei einer Temperatur im Bereich von 10 bis 95 °C, einem pH-Wert im Bereich von 1 bis 5 und bei Vakuumbedingungen eingetaucht wird.

8. Verfahren nach einem der Ansprüche 1 bis 7, wobei der Beschichtungsschritt 3) weiterhin das Spülen des mit Ammoniummolybdatophosphat beschichteten Filterelements mit einer Reinigungslösung, insbesondere mit einer Lösung von HNO₃, vorzugsweise einer Lösung von 0,5 mol/l HNO₃, umfasst.

9. Verfahren nach einem der Ansprüche 1 bis 8, wobei in dem Beschichtungsschritt 3) das auf die Oberfläche des Absorptionsfilterelements aufgebrachte Ammoniummolybdatophosphat eine Dicke von weniger als 1 µm aufweist.

10. Verfahren nach einem der Ansprüche 1 bis 9, wobei der Beschichtungsschritt 3) umfasst: Lösen von Ammoniummolybdatophosphat in einer Lösung von Ammoniumhydroxid, um eine Konzentration von Ammoniummolybdatophosphat im Bereich von 1 bis 10 Gew.-% zu erhalten; Eintauchen des in Schritt 2) hergestellten Absorptionsfilterelements in die vorstehende Beschichtungslösung bei einer Temperatur im Bereich von 10 bis 95 °C, einem pH-Wert im Bereich von 1 bis 5 und Vakuumbedingungen über 1 h; Spülen des Absorptionsfilterelements mit einer Lösung von 0,5 mol/l HNO₃, bis die HNO₃-Reinigungsflüssigkeit klar wird; wobei das auf die Oberfläche des Absorptionsfilterelements aufgebrachte Ammoniummolybdatophosphat eine Dicke von weniger als 1 µm aufweist.

11. Verfahren nach einem der Ansprüche 1 bis 10, wobei:
in Schritt 1) das Substratmaterial Polypropylen (PP) ist, das Kupplungsagens Methylmethacrylat mit einem Gewichtsanteil von 2 % ist, und das Ammoniummolybdatophosphat einen Gewichtsanteil von 5 % hat; und die Aufheiztemperatur 190 °C beträgt;
in Schritt 2) das gesponnene Filament zu einem Absorptionsfilterelement mit einer Dicke von 30 mm in Form eines hohlen Zylinders oder Rohres geformt wird; und
der Beschichtungsschritt in 3) umfasst: Lösen von Ammoniummolybdatophosphat in einer Lösung von Ammoniumhydroxid mit einer Konzentration von 0,5 mol/l, um eine Konzentration von Ammoniummolybdatophosphat von 1 Gew.-% zu erhalten; Eintauchen des in 2) hergestellten Absorptionsfilterelements in die vorstehende Beschichtungslösung bei 95 °C, pH = 1 und Vakuumbedingungen über 1 h; und Spülen des Absorptionsfilterelements mit einer Lösung von 0,5 mol/l HNO₃, bis die HNO₃-Reinigungsflüssigkeit klar wird; wobei das auf die Oberfläche des Absorptionsfilterelements aufgebrachte Ammoniummolybdatophosphat weniger als 1 µm Dicke aufweist.

12. Verfahren nach einem der Ansprüche 1 bis 10, wobei:
in Schritt 1) das Substratmaterial Polyethersulfon (PES) ist, das Kupplungsagens Styrol mit einem Gewichtsanteil von 3 % ist, und das Ammoniummolybdatophosphat einen Gewichtsanteil von 10 % hat; und die Aufheiztemperatur 220 °C beträgt;
in Schritt 2) das gesponnene Filament zu einem Absorptionsfilterelement mit einer Dicke von 50 mm in Form eines hohlen Rotationszylinders geformt wird; und
der Beschichtungsschritt 3) umfasst: Lösen von Ammoniummolybdatophosphat in einer Lösung von Ammoniumhydroxid mit einer Konzentration von 0,5 mol/l, um eine Konzentration von Ammoniummolybdatophosphat von 1 Gew.-% zu erhalten; Eintauchen des in 2) hergestellten Absorptionsfilterelements in die vorstehende Beschichtungslösung bei 95 °C, pH = 1 und Vakuumbedingungen über 1 h; und Spülen mit einer Lösung von 0,5 mol/l HNO₃, bis die HNO₃-Reinigungsflüssigkeit klar wird; wobei das auf die Oberfläche des Absorptionsfilterelements aufgebrachte Ammoniummolybdatophosphat weniger als 1 µm Dicke aufweist.

13. Verfahren nach einem der Ansprüche 1 bis 10, wobei:
in Schritt 1) das Substratmaterial Polypropylen (PP) ist, das Kupplungsagens Methylmethacrylat mit einem Gewichtsanteil von 2 % ist; das Ammoniummolybdatophosphat einen Gewichtsanteil von 5 % hat; und die Aufheiztemperatur 190 °C beträgt;
in Schritt 2) das gesponnene Filament zu einem Absorptionsfilterelement mit einer Dicke von 30 mm in Form eines hohlen Rotationszylinders geformt wird; und
der Beschichtungsschritt 3) umfasst: Lösen von Ammoniummolybdatophosphat in einer Lösung von Ammoniumhydroxid mit einer Konzentration von 0,5 mol/l, um eine Konzentration von Ammoniummolybdatophosphat von 5 Gew.-% zu erhalten; Eintauchen des in 2) hergestellten Absorptionsfilterelements in die vorstehende Beschichtungslösung bei 55 °C, pH = 3 und Vakuumbedingungen über 1 h; und Spülen mit einer Lösung von 0,5 mol/l HNO₃, bis die HNO₃-Reinigungsflüssigkeit klar wird; wobei das auf die Oberfläche des Absorptionsfilterelements aufgebrachte Ammoniummolybdatophosphat weniger als 1 µm Dicke aufweist.

## Revendications

1. Procédé pour la préparation d'un élément absorbant de filtre pour le césium (Cs), le procédé comprenant les étapes suivantes :
1) Modification d'un matériau substrat, comprenant :
ajouter 1-10 % massique de phosphomolybdate d'ammonium et 1-3 % massique d'un agent de couplage, sélectionné parmi le méthacrylate de méthyle et le styrène, à un matériau substrat sélectionné parmi le polypropylène (PP) et le polyéthersulfone (PES), chauffer à une température dans une plage de 160 à 220 °C et mélanger de façon homogène de telle sorte que le matériau substrat soit modifié par le phosphomolybdate d'ammonium ;
2) Appliquer un procédé de fusion-soufflage et de moulage à l'élément filtrant, comprenant :
filer le matériau préparé en 1) par un élément micropore de 5 µm à l'aide d'un procédé de fusion-soufflage pour produire un filament filé, et former le filament filé en un élément absorbant de filtre ;
3) Revêtir l'élément filtrant, comprenant :
revêtir la surface de l'élément absorbant de filtre préparé en 2) avec du phosphomolybdate d'ammonium, de telle sorte que le phosphomolybdate d'ammonium appliqué est modifié par le phosphomolybdate d'ammonium à l'intérieur du matériau substrat ;
4) Traitement de stabilisation et de vieillissement de l'élément filtrant :
Tremper l'élément filtrant de 3 à 12 h à une température dans une plage de 80 à 120 °C.

2. Le procédé selon la revendication 1, l'élément absorbant de filtre formé au cours de l'étape 2) ayant la forme d'un cylindre ou d'un tube de rotation creux.

3. Le procédé selon la revendication 2, l'élément absorbant de filtre formé au cours de l'étape 2) ayant une granularité nominale d'une taille de pore de 5 µm.

4. Le procédé selon l'une quelconque des revendications 1 à 3, l'élément absorbant de filtre étant formé avec une épaisseur de 5 à 50 mm, de préférence de 30 à 50 mm, au cours de l'étape 2).

5. Le procédé selon l'une quelconque des revendications 1 à 4, une solution de revêtement étant préparé comprenant de 1 à 10 % massique de phosphomolybdate d'ammonium, au cours de l'étape de revêtement 3).

6. Le procédé selon l'une quelconque des revendications 1 à 5, une solution de revêtement étant préparé comprenant du phosphomolybdate d'ammonium dissous dans une solution d'hydroxyde d'ammonium, de préférence dans une solution d'hydroxyde d'ammonium ayant une concentration de 0,5 mol/L, au cours de l'étape de revêtement 3).

7. Le procédé selon l'une quelconque des revendications 1 à 6, l'élément filtrant étant immergé dans une solution de revêtement de phosphomolybdate d'ammonium à une température dans une plage de 10 à 95 °C, avec un pH dans une plage de 1 à 5 et dans des conditions de vide, au cours de l'étape de revêtement 3).

8. Le procédé selon l'une quelconque des revendications 1 à 7, l'étape de revêtement 3) comprenant de plus rincer l'élément filtrant revêtu avec le phosphomolybdate d'ammonium avec une solution de nettoyage, en particulier une solution d'HNO₃, de préférence une solution d'HNO₃ à 0,5 mol/L.

9. Le procédé selon l'une quelconque des revendications 1 à 8, le phosphomolybdate d'ammonium revêtant la surface de l'élément absorbant de filtre ayant une épaisseur inférieure à 1 µm, dans l'étape de revêtement 3).

10. Le procédé selon l'une quelconque des revendications 1 à 9, l'étape de revêtement 3) comprenant : dissoudre le phosphomolybdate d'ammonium dans une solution d'hydroxyde d'ammonium pour produire une concentration de phosphomolybdate d'ammonium dans une plage de 1 à 10 % massique ; immerger l'élément absorbant de filtre préparé au cours de l'étape 2) dans la solution de revêtement susmentionnée à une température dans une plage de 10 à 95 °C, avec un pH dans une plage de 1 à 5 et dans des conditions de vide pendant 1 h ; rincer l'élément absorbant de filtre avec une solution d'HNO₃ à 0,5 mol/L jusqu'à ce que le liquide de nettoyage HNO₃devienne clair ; le phosphomolybdate d'ammonium revêtant la surface de l'élément absorbant de filtre ayant une épaisseur inférieure à1 µm.

11. Le procédé selon l'une quelconque des revendications 1 à 10 :
dans l'étape 1), le matériau substrat étant du polypropylène (PP), l'agent de couplage étant du méthacrylate de méthyle avec un pourcentage massique de 2 % et le phosphomolybdate d'ammonium ayant un pourcentage massique de 5 % ; et la température de chauffage étant de 190 °C ;
dans l'étape 2), le filament filé étant formé en un élément absorbant de filtre avec une épaisseur de 30 mm en forme de cylindre ou de tube creux ; et
l'étape de revêtement 3) comprenant : dissoudre le phosphomolybdate d'ammonium dans une solution d'hydroxyde d'ammonium avec une concentration de 0,5 mol/L pour produire une concentration de phosphomolybdate d'ammonium d'1 % massique, immerger l'élément absorbant de filtre préparé en 2) dans la solution de revêtement susmentionnée à 95 °C, avec pH=1 et dans des conditions de vide pendant 1 h ; et rincer l'élément absorbant de filtre avec une solution d'HNO₃ à 0,5 mol/L jusqu'à ce que le liquide de nettoyage HNO₃ devienne clair ; le phosphomolybdate d'ammonium revêtant la surface de l'élément absorbant de filtre ayant une épaisseur inférieure à1 µm.

12. Le procédé selon l'une quelconque des revendications 1 à 10 :
dans l'étape 1), le matériau substrat étant du polyéthersulfone (PES), l'agent de couplage étant du styrène avec un pourcentage massique de 3 % et le phosphomolybdate d'ammonium ayant un pourcentage massique de 10 % ; et la température de chauffage étant de 220 °C ;
dans l'étape 2), le filament filé étant formé en un élément absorbant de filtre avec une épaisseur de 50 mm en forme de cylindre de rotation creux ; et
l'étape de revêtement 3) comprenant : dissoudre le phosphomolybdate d'ammonium dans une solution d'hydroxyde d'ammonium avec une concentration de 0,5 mol/L pour produire une concentration de phosphomolybdate d'ammonium d'1 % massique, immerger l'élément absorbant de filtre préparé en 2) dans la solution de revêtement susmentionnée à 95 °C, avec pH=1 et dans des conditions de vide pendant 1 h ; et rincer avec une solution d'HNO₃ à 0,5 mol/L jusqu'à ce que le liquide de nettoyage HNO₃devienne propre ; le phosphomolybdate d'ammonium revêtant la surface de l'élément absorbant de filtre ayant une épaisseur inférieure à1 µm.

13. Le procédé selon l'une quelconque des revendications 1 à 10 :
dans l'étape 1), le matériau substrat étant du polypropylène (PP), l'agent de couplage étant du méthacrylate de méthyle avec un pourcentage massique de 2 % ; le phosphomolybdate d'ammonium ayant un pourcentage massique de 5 % ; et la température de chauffage étant de 190 °C ;
dans l'étape 2), le filament filé étant formé en un élément absorbant de filtre avec une épaisseur de 30 mm en forme de cylindre de rotation creux ; et
l'étape de revêtement 3) comprenant : dissoudre le phosphomolybdate d'ammonium dans une solution d'hydroxyde d'ammonium avec une concentration de 0,5 mol/L ; pour produire une concentration de phosphomolybdate d'ammonium de 5 % massique, immerger l'élément absorbant de filtre préparé en 2) dans la solution de revêtement susmentionnée à 55 °C, avec pH=3 et dans des conditions de vide pendant 1 h ; et rincer avec une solution d'HNO₃ à 0,5 mol/L jusqu'à ce que le liquide de nettoyage HNO₃devienne propre ; le phosphomolybdate d'ammonium revêtant la surface de l'élément absorbant de filtre ayant une épaisseur inférieure à1 µm.
